# EUROPEAN PATENT APPLICATION

(11) **EP 4 393 448 A1**
(43) Date of publication of application: **03.07.2024**
(21) Application number: 23159558.8
(22) Date of filing: 02.03.2023
(51) Int. Cl.: A61C 17/22

(54) **TOOTH BRUSHING DEVICE**

(30) Priority: 26.12.2022 US 202263435306 P
(71) Applicant: Koninklijke Philips N.V., 5656 AG Eindhoven (NL)
(72) Inventor: BOERSMA, Joldert Maria, Eindhoven (NL); VAN DER KAMP, Gertrude, Eindhoven (NL)
(74) Representative: Philips Intellectual Property & Standards

(57) **Abstract**

The subject-matter of the present disclosure relates to a tooth brushing device (20). The tooth brushing device (22) comprises: a mouthpiece (22) for covering a plurality of teeth of a dental arch; a plurality of cleaning elements (24) distributed around the mouthpiece; and a plurality of actuators for moving the plurality of cleaning elements, wherein each cleaning element of the plurality of cleaning elements is associated with a different actuator of the plurality of actuators

## Description

### FIELD

The subject-matter of the present disclosure relates to the field of dental hygiene. More specifically, the subject-matter of the present disclosure relates to tooth brushing devices.

### BACKGROUND

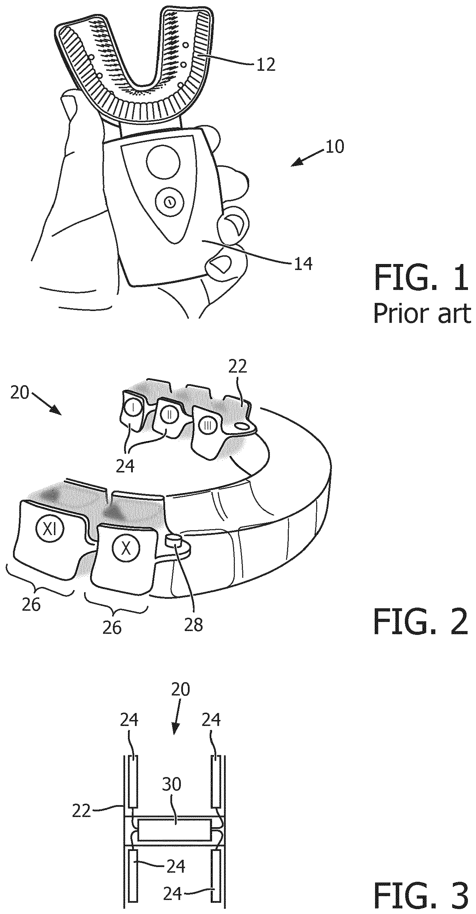

Fig. 1 shows a tooth brushing device 10 known from the prior art. The tooth brushing device 10 includes a mouthpiece 12 and a handle 14 connected to the mouthpiece 12 so as to be at a facial side of the incisors, in-use. The handle 14 houses an actuator for powering a cleaning element distributed around the mouthpiece 12.

Such devices may struggle to clean teeth distal to the actuator, e.g. the molars due to losses along the cleaning element and a drive train present in the handle towards the cleaning element.

It is an aim of the subject-matter of the present disclosure to improve on the prior art.

### SUMMARY

According to a first aspect of the present invention, there is provided a tooth brushing device comprising: a mouthpiece for covering a plurality of teeth of a dental arch; a plurality of cleaning elements distributed around the mouthpiece; and a plurality of actuators for moving the plurality of cleaning elements, wherein each cleaning element of the plurality of cleaning elements is associated with a different actuator of the plurality of actuators.

By employing a plurality of cleaning elements each being associated with a different actuator means that losses along a cleaning element to distal parts of the mouthpiece will be reduced.

Therefore, more even cleaning of teeth throughout the dental arch may be achieved. It will be appreciated that the term different may be used in this context to mean one actuator per cleaning element. Whilst it is conceivable that each actuator may be a different type of actuator, in some embodiments, the plurality of actuators may all be of the same type.

In an embodiment, the plurality of actuators may be positioned to be within a user's mouth, in-use. In this way, a centre of gravity of the device will be within the user's mouth making the device more comfortable for a user during brushing.

In an embodiment, the plurality of actuators may be distributed around the mouthpiece at an occlusal part of the dental arch. Positioning the actuators at the occlusal part of the dental arch is easiest when considering the most common brushing movement being up and down.

In an embodiment, one or more of the plurality of actuators may comprise an actuator selected from a list including: a piezoelectric actuator, a motor with an eccentric, a magnetostrictive actuator, an electroactive polymer, a shape memory alloy, and a shape memory polymer.

In an embodiment, the tooth brushing device may further comprise a clamp operable to bias the mouthpiece against the dental arch. In this way, the clamp can help to ensure that the correct brushing force is applied by the cleaning elements during brushing.

In an embodiment, the clamp may be provided by a shape memory alloy or a shape memory polymer. Such materials provide an easy way to accommodate the clamp without taking up too much space in the mouth.

In an embodiment, one or more of the plurality of cleaning elements may comprise a tuft of bristles.

In an embodiment, one or more of the plurality of cleaning elements may comprise an interdental brush.

In an embodiment, the interdental brush may be formed by one of the actuators of the plurality of actuators, wherein the actuator of the interdental brush preferably comprises an electroactive polymer. The electroactive polymer works well in such an embodiment to save space inside the mouth.

In an embodiment, the mouthpiece for covering the plurality of teeth of the dental arch may be a mouthpiece for covering a plurality of teeth from both dental arches of opposing jaws of a wearer. In this way, brushing time is reduced since both dental arches can be cleaned simultaneously.

In an embodiment, the mouthpiece may have a substantially H-shaped cross-section. This is in contrast to embodiments where the mouthpiece may be configured to clean a single dental arch, in which case, the mouthpiece may have a substantially U shaped cross-section.

In an embodiment, the mouthpiece may be divided into a plurality of segments, wherein each segment may include an actuator of the plurality of actuators and a cleaning element of the plurality of cleaning elements. In this way, a segment where the actuator or cleaning element has failed can be located more easily.

In an embodiment, the brushing device further comprises a plurality of couplings, wherein each coupling of the plurality of couplings may be configured to connect together respective adjacent segments of the plurality of segments, wherein each coupling may be configured to permit detachment of the respective adjacent segments of the plurality of segments. In this way, the segments can be disconnected to replace a segment in the event of a failure of the actuator or the cleaning element. Additionally, disconnecting a segment allows user-adaption of the mouthpiece to get a better fit to different size teeth, e.g. smaller teeth versus larger teeth.

In an embodiment, one or more of the couplings of the plurality of couplings may be flexible. In this way, the mouthpiece may conform to the specific geometry of a user's dental arch more easily.

In an embodiment, the tooth brushing device may comprise a power unit for powering the plurality of actuators, wherein the power unit may be positioned at a facial side of the dental arch. In this way, the power unit may be provided outside the mouth of a user for comfort reasons.

These and other aspects of the present invention will be apparent from and elucidated with reference to the embodiment(s) described hereinafter.

### BRIEF DESCRIPTION OF DRAWINGS

The embodiments of the present inventions may be best understood with reference to the accompanying Figs, in which:
Fig. 1 shows a perspective view of a tooth brushing device known from the prior art;
Fig. 2 shows a perspective schematic view of part of a tooth brushing device according to one of more embodiments;
Fig. 3 shows a cross-section view of the tooth brushing device from Fig. 2;
Fig. 4 shows a block diagram representing various features of the tooth brushing device of Fig. 2;
Fig. 5 shows an example actuator from the tooth brushing device of Fig. 2;
Fig. 6 shows a cleaning element and actuator from the tooth brushing device of Fig. 2 in the form of an interdental brush;
Fig. 7 shows a schematic illustration of the actuator type used in the interdental brush of Figure 6; and
Fig. 8 shows a different schematic illustration of the interdental brush than the one shown in Fig. 7.

### DESCRIPTION OF EMBODIMENTS

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

With reference to Fig. 2, according to one or more embodiments, a tooth brushing device 20 includes a mouthpiece 22 for covering a plurality of teeth of a dental arch and a plurality of cleaning elements 24 distributed around the mouthpiece 22. The mouthpiece 22 is divided into a plurality of segments 26. The tooth brushing device 20 comprises a plurality of couplings 28. Each coupling 28 is configured to connect together adjacent segments 26. Each coupling 28 is configured to permit detachment of the respective adjacent segments 26. One or more of the couplings 28 may be flexible.

With reference to Fig. 3, the tooth brushing device 20 may have a substantially H-shaped cross-section. In embodiments where the mouthpiece 22 is split into two mouthpieces, one for each dental arch, the two mouthpieces may be substantially U-shaped. The device 20 may also include a plurality of actuators 30 for moving the plurality of cleaning elements 24. The plurality of actuators 30 may be distributed around the mouthpiece. The plurality of actuators 30 may be provided within a user's mouth. The actuators 30 may be provided at an occlusal side of the teeth of the dental arch of the wearer, in-use. In other embodiments, the actuators may be provided at a lingual side or a facial or buccal side of the teeth. Each cleaning element 24 is associated with a different actuator of the plurality of actuators 30. Each segment includes an actuator 30 and a cleaning element 24.

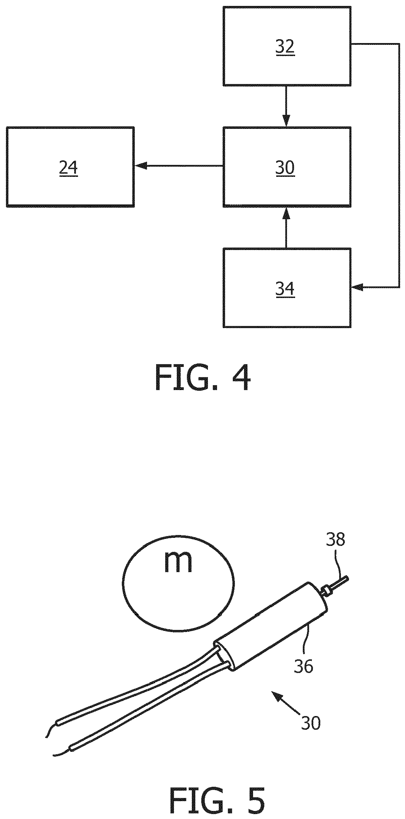

With reference to Fig. 4, the tooth brushing device 20 includes the actuators 30, the cleaning elements 24, a power unit 32, and a processor 34. The processor 34 may be a microprocessor, for example. The power unit 32 may power the actuators 30 and the processor 34. The processor 34 is configured to send control commands to the actuators 30 to apply forces to the cleaning elements 24 to move them for cleaning. The movement may be a brushing motion, for example. The brushing motion may be an up-down (vertical) motion, a left-right (horizontal) motion, a tapping motion, or a combination of two or more of these motions. The type and position of the actuator and orientation of its axis may be chosen to provide the desired motion. The power unit 32 may be a battery frame for housing a battery. The battery may be a primary battery or a secondary battery. In some embodiments, the power unit 32 may be positioned at a facial side of the dental arch. More specifically, the power unit 32 may be provided to sit outside a user's mouth, in-use.

In Fig. 5, an example of an actuator 30 is shown. The actuator 30 includes a casing 36 and a moveable arm 38 for providing longitudinal, reciprocal motion. The actuators 30 may be a mix of different types of actuator or may be all the same type of actuators. The types of actuator that may be used for the tooth brushing device 20 include a piezoelectric actuator, a motor with an eccentric, a magnetostrictive actuator, an electroactive polymer, a shape memory alloy, and a shape memory polymer.

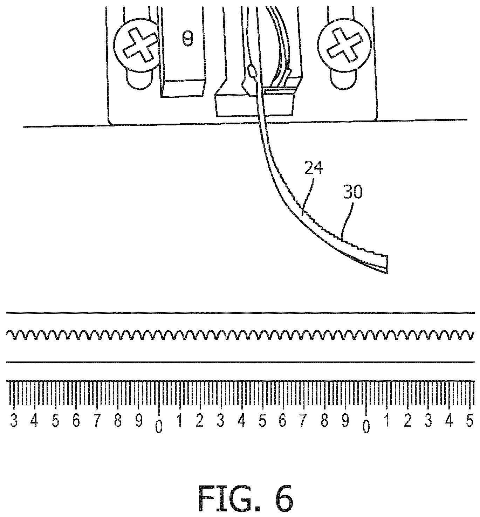

With reference to Fig. 6, one or more of the cleaning elements 24 may be provided in the form of bristles or bristle tufts arranged in a bristle field, or as an interdental brush. One or more of the bristles or tufts, or interdental brush may be formed by one of the actuators 30. More specifically, they may be formed by an electroactive polymer actuator or actuators.

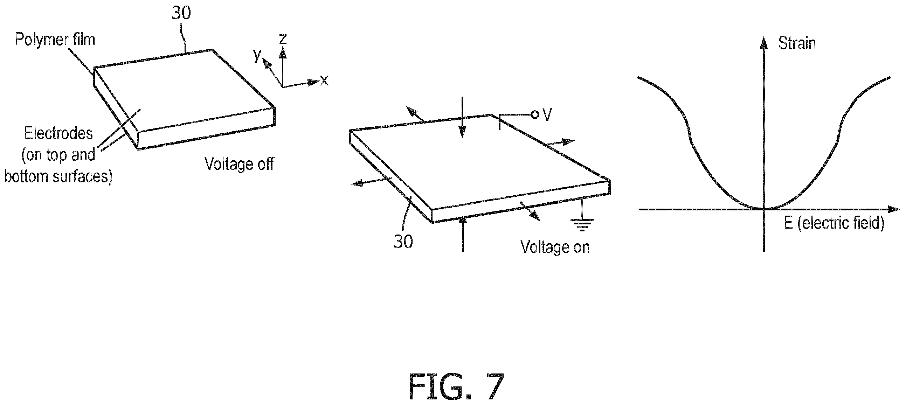

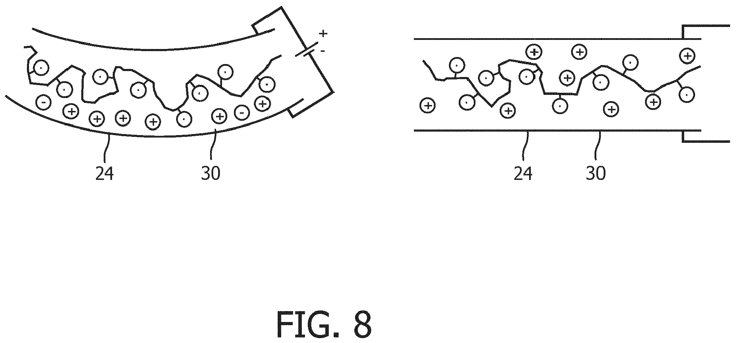

With reference to Figs 7 and 8, the electroactive polymer may be deform in response a voltage potential applied to it. In this way, application of a voltage effects deformation in the interdental brush to clean between the teeth of the dental arch.

The cleaning elements 24 may also include a tuft of bristles.

The tooth brushing device 20 may also include a clamp operable to bias the mouthpiece against the dental arch. The clamp may be provided by providing the cleaning elements 24 or the mouthpiece 22 as a shape memory alloy or a shape memory polymer.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A tooth brushing device (20) comprising:
a mouthpiece (22) for covering a plurality of teeth of a dental arch;
a plurality of cleaning elements (24) distributed around the mouthpiece; and
a plurality of actuators (30) for moving the plurality of cleaning elements,
wherein each cleaning element of the plurality of cleaning elements is associated with a different actuator of the plurality of actuators.

2. The tooth brushing device of Claim 1, wherein the plurality of actuators is positioned to be within a user's mouth, in-use.

3. The tooth brushing device of Claim 2, wherein the plurality of actuators is distributed around the mouthpiece at an occlusal part of the dental arch.

4. The tooth brushing device of any preceding claim, wherein one or more of the plurality of actuators comprises an actuator selected from a list including: a piezoelectric actuator, a motor with an eccentric, a magnetostrictive actuator, an electroactive polymer, a shape memory alloy, and a shape memory polymer.

5. The tooth brushing device of any preceding claim, further comprising a clamp operable to bias the mouthpiece against the dental arch.

6. The tooth brushing device of Claim 5, wherein the clamp is provided by a shape memory alloy or a shape memory polymer.

7. The tooth brushing device of any preceding claim, wherein one or more of the plurality of cleaning elements comprises a tuft of bristles.

8. The tooth brushing device of any preceding claim, wherein one or more of the plurality of cleaning elements comprises an interdental brush.

9. The tooth brushing device of Claim 8, wherein the interdental brush is formed by one of the actuators of the plurality of actuators, wherein the actuator of the interdental brush preferably comprises an electroactive polymer.

10. The tooth brushing device of any preceding claim, wherein the mouthpiece for covering the plurality of teeth of the dental arch is a mouthpiece for covering a plurality of teeth from both dental arches of opposing jaws of a wearer.

11. The tooth brushing device of Claim 10, wherein the mouthpiece has a substantially H-shaped cross-section.

12. The tooth brushing device of any preceding claim, wherein the mouthpiece is divided into a plurality of segments, wherein each segment includes an actuator of the plurality of actuators and a cleaning element of the plurality of cleaning elements.

13. The tooth brushing device of Claim 12, further comprising a plurality of couplings, wherein each coupling of the plurality of couplings is configured to connect together respective adjacent segments of the plurality of segments, wherein each coupling is configured to permit detachment of the respective adjacent segments of the plurality of segments.

14. The tooth brushing device of Claim 12 or Claim 13, wherein one or more of the couplings of the plurality of couplings is flexible.

15. The tooth brushing device of any preceding claim comprises a power unit (32) for powering the plurality of actuators, wherein the power unit is positioned at a facial side of the dental arch.
